(19) Europäisches Patentamt
European Patent Office
Office européen des brevets

(11) **EP 1 198 913 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(51) Int Cl.7: **H04L 1/00**

(21) Anmeldenummer: **00936639.4**

(86) Internationale Anmeldenummer:
**PCT/DE2000/001253**

(22) Anmeldetag: **20.04.2000**

(87) Internationale Veröffentlichungsnummer:
**WO 2001/008340 (01.02.2001 Gazette 2001/05)**

(54) **VERFAHREN ZUM FEHLERSCHUTZ EINES DATENBITSTROMES**

METHOD OF PROVIDING ERROR PROTECTION FOR A DATA BIT FLOW

PROCEDE POUR EMPECHER LES ERREURS DANS UN TRAIN DE BITS D'INFORMATION

(84) Benannte Vertragsstaaten:
**DE FR GB IT**

(30) Priorität: **22.07.1999 DE 19934505**

(43) Veröffentlichungstag der Anmeldung:
**24.04.2002 Patentblatt 2002/17**

(73) Patentinhaber: **SIEMENS AKTIENGESELLSCHAFT
80333 München (DE)**

(72) Erfinder: **XU, Wen
D-82008 Unterhaching (DE)**

(56) Entgegenhaltungen:
- **HINDELANG T ET AL: "QUALITY ENHANCEMENT OF CODED AND CORRUPTED SPEECHES IN GSM MOBILE SYSTEMS USING REDIDUAL REDUNDANCY" IEEE INTERNATIONAL CONFERENCE ON ACOUSTICS, SPEECH, AND SIGNAL PROCESSING (ICASSP),US,LOS ALIMITOS,CA: IEEE COMP. SOC. PRESS, 21. April 1997 (1997-04-21), Seiten 259-262, XP000789167 ISBN: 0-8186-7920-4**
- **HAGENAUER J: "SOURCE-CONTROLLED CHANNEL DECODING" IEEE TRANSACTIONS ON COMMUNICATIONS,US,IEEE INC. NEW YORK, Bd. 43, Nr. 9, 1. September 1995 (1995-09-01), Seiten 2449-2457, XP000525669 ISSN: 0090-6778 in der Anmeldung erwähnt**
- **YAP C W ET AL: "A combined source-channel video coding scheme for mobile channels" SIGNAL PROCESSING. IMAGE COMMUNICATION,NL,ELSEVIER SCIENCE PUBLISHERS, AMSTERDAM, Bd. 14, Nr. 6-8, Mai 1999 (1999-05), Seiten 559-574, XP004165395 ISSN: 0923-5965**

**Beschreibung**

Die Erfindung betrifft ein Verfahren zum Fehlerschutz nach dem Oberbegriff des Anspruchs 1 sowie eine Vorrichtung zur Durchführung dieses Verfahrens.

Quellensignale wie Sprache, Ton, Bild und Video beinhalten fast immer statistische Redundanz. Durch die Quellencodierung kann diese Redundanz entfernt werden, so daß eine effiziente Übertragung bzw. Speicherung des Quellensignals ermöglicht wird. Auf der anderen Seite ist es bei der Signalübertragung notwendig, gezielt Redundanz durch Kanalcodierung wieder hinzuzufügen, um Kanalstörungen zu beseitigen.

Aufgrund der unvollständigen Kenntnisse über die Quellensignale oder Einschränkungen bei der Komplexität des Codierverfahrens ist die Quellencodierung üblicherweise nur suboptimal realisierbar, d.h. in komprimierten Daten ist noch gewisse Redundanz vorhanden. Diese Restredundanz kann bei der sogenannten quellengesteuerten oder gemeinsamen Kanaldecodierung ausgenutzt werden, um weitere Bitfehler zu korrigieren; vgl. DE 4224214 C2 und J. Hagenauer, "Source-controlled channel decoding," IEEE Trans. Commun., Vol. 43, S. 2449-2457, Sept. 1995. Hierbei wird der Decodiervorgang des Kanalcoders sowohl durch die übertragenen Codebits als auch durch eine APriori-/A-Posteriori-Information über den wahrscheinlichen Wert einiger wichtiger Quellenbits gesteuert. Im Falle der VA(Viterbi-Algorithmus)-Decodierung wurde diese Methode als Apri-VA bezeichnet. Sie wird bereits für die Übertragung von Sprache, Ton, Bild und Video erfolgreich angewandt.

Die durch Quellencodierung generierten Bits (Informations-bits) sind im allgemeinen stark unterschiedlich empfindlich gegen Bitfehler, die z.B. bei digitaler Nachrichtenübertragung/Speicherung entstehen können, so daß ein ungleicher Fehlerschutz (Unequal Error Protection, UEP) für unterschiedliche Bits erforderlich ist, d.h. wichtige Bits müssen besser geschützt werden als wenig wichtige.

Ein Beispiel ist der auf dem CELP (code excited linear prediction) basierenden Sprachcodec, wie z. B. der Enhanced Fullrate(EFR)- und Adaptive MultiRate (AMR)-Sprachcodec im GSM-Standard. Der GSM-EFR-Codec generiert alle 20 ms (entsprechend einem Rahmen) 244 Bits (entsprechend 12.2 kbit/s). Fehler in diesem Bitstrom wirken sich stark unterschiedlich auf die Sprachqualität nach der Decodierung aus. Fehler in manchen Bits, z.B. Bits von LPC(linear predictive coding)-Koeffizienten, führen zu Unverständlichkeit oder lauten Geräuschen, Fehler in anderen Bits (z.B. Bits von festen Codebüchern) dagegen sind kaum wahrnehmbar. Dies hat Anlaß gegeben zu einer Einteilung der Bits nach dem Sprachcoder in Klassen (Klasse 1a, 1b und 2), die meist unterschiedlich gegen Fehler geschützt werden. Um eine vernünftige Sprachqualität zu erhalten, ist es typischerweise (je nach Codectyp und Qualitätsanforderung) nötig, die wichtigsten Bits bis zu einer Bitfehlerrate BER (bit error rate) von etwa $10^{-4}$ - $10^{-5}$ (nach Kanaldecodierung) und die unwichtigsten Bits bis zu einer Bitfehlerrate BER von $10^{-1}$ - $10^{-2}$ zu schützen. Dieses Verfahren wird als UEP-Verfahren bezeichnet.

Die üblichen Methoden zur Realisierung eines UEP sind:

-   Verwendung von speziellen Codes, die einen UEP-Mechanismus besitzen (vgl. z.B. H. Ma, "Binary unequal errorprotection block codes formed from convolutional codes by generalized tail-biting," IEEE Trans. Information Theory, Vol. 32, S. 776-786, 1986).
-   separate Kanalcodierung der unterschiedlichen Klassen von Bits (z.B. im GSM EFR; die Bits der Klassen la und lb werden durch einen Faltungscode der Rate 1/2 und Gedächtnis $m$ = 4 codiert, und die Bits der Klasse 2 werden uncodiert übertragen).
-   Kombination von einer Kanalcodierung und einer anschlie-ßenden Punktierung, die an der Wichtigkeit der Bits anpaßt (Beispiel: GSM-AMR-Standard).

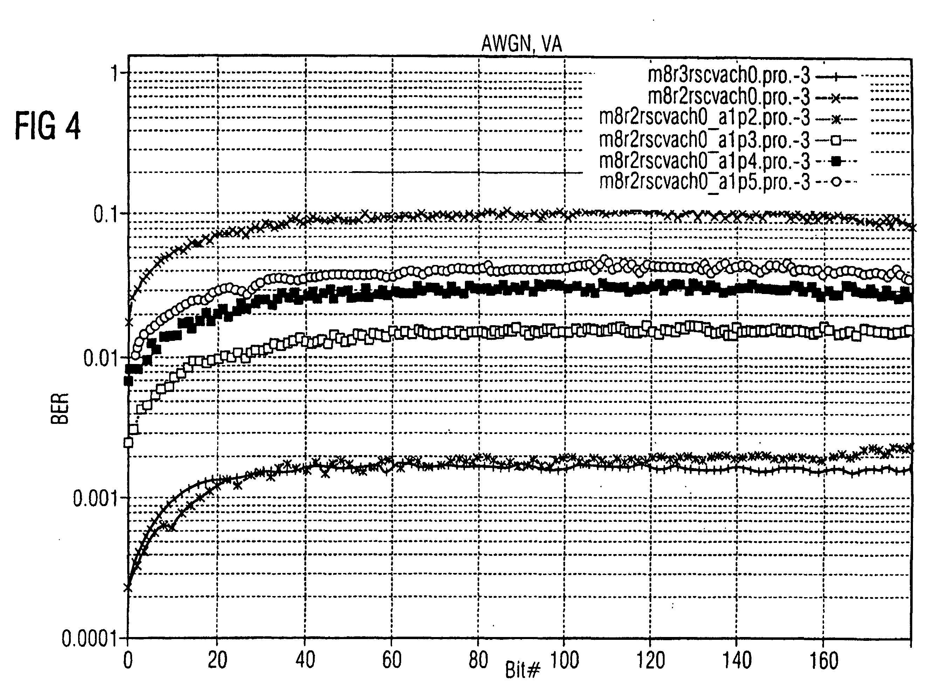

Momentan wird die dritte Generation von Mobilfunksystemen 3GPP (third generation partner project) oder UMTS (universal mobile telecommunication system) standardisiert. Für allgemeine Datenübertragung wurde bereits eine einheitliche Struktur vereinbart (siehe: Figure 4-1 und Figure 4-2 von *Transport channel multiplexing structure for uplink, in TS 25. 212 V2. 0. 0 (1999-06), 3rd Generation Partnership Project (3GPP); Technical Specification Group (TSG), Radio Access Network (RAN) ; Working Group 1 (WG1))*.

Dabei wird die Kanalcodierung mit Faltungscode (Rate 1/2 und 1/3, Constraint Length/Einflußlänge m+1=9, wobei m als Codegedächtnis bezeichnet wird) oder Turbo-Codes realisiert. Das Rate-Matching dient dazu, die durch die Kanalcodierung generierten Codebits entsprechend der Qualität des Service und/oder der möglichen (festen) Länge des Datenblocks innerhalb eines Transport-Kanals zu wiederholen (wenn die Codebits zu wenig sind) oder zu punktieren (wenn die Codebits zu viel sind). Alle Funktionseinheiten (CRC, Multiplexing, Kanalcodierung, Interleaving, Rate Matching, etc.) dürfen nur auf den ganzen Datenblock (d.h. den vollständigen Eingangs-Bitstrom) angewandt werden, nicht aber auf Teile davon.

Eine solche Struktur macht zwar das System einfach und einheitlich für unterschiedliche Services. Es ist aber mit den üblichen Methoden der Kanalcodierung schwierig, einen UEP, wie beispielsweise für Sprachservices, zu realisieren. Um die Wichtigkeit der AMR-codierten Bits anzupassen, sollten die unterschiedliche Klassen von Bits unterschiedlich gut geschützt übertragen werden. Eine einfache Lösung ist, die verschiedenen Klassen von Bits über unterschiedliche Transport-Kanäle zu übertragen.

Nachteile einer derartigen UEP-Lösung sind das komplizierte Management der Zerlegung und Zusammensetzten von Bits und das dazu notwendigen Overhead.

Wir betrachten den Modus 12.2 kbit/s des AMR-Codecs als Beispiel. Dieser Modus hat 3 Klassen von Bits: Klasse A (81 Bits), Klasse B (103 Bits) und Klasse C (60 Bits). Werden die 3 Klassen von Bits über 3 Transport-Kanals übertragen, dann werden jeder Klasse zunächst z.B. 16 CRC-Bits (für Blockfehlererkennung) und anschließend 8 Tailbits (falls wie vorgesehen, der Faltungscode mit Rate 1/3, Constraint Length 9 eingesetzt wird) zugefügt. Die gesamten Codebits nach Kanalcodierung sind 3x(81+16+8) + 3x (103+16+8) + 3x(60+16+8) = 948 Bits, davon gehören 3x(16+8) + 3x(16+8) +3x(16+8) = 216 Bits, d.h. 216/948 ≈ 23 % aller Codebits zum Overhead. Werden aber alle 244 Bits mit einem Transport-Kanal übertragen, dann beträgt das Overhead 3x(16+8) = 72 Bits (diese Bits sind nötig für UMTS Datenübertragung), d.h. 72/804 ≈ 9 % aller Codebits, wobei 804 = (244 + 16 + 8) x 3.

Der Erfindung liegt daher die Aufgabe zugrunde, ein verbessertes Verfahren der gattungsgemäßen Art mit verringertem Schutzaufwand (Overhead) und damit höherer Netto-Informationsdichte sowie eine entsprechende Vorrichtung anzugeben.

Die Erfindung schließt den grundlegenden Gedanken einer gezielten Einfügung von bekannten Bits vor dem Schritt der Kanalcodierung ein. Diese bekannten Bits - nachfolgend auch als Dummy-Bits bezeichnet - werden in der Nähe der wichtigen Informationsbits eingefügt, und zwar (anders als bei der bekannten Code-Terminierung, wo eine bekannte Bit-Gruppe am Ende eines Datenblockes steht) in nicht-terminierender Weise und insbesondere zu beiden Seiten der Informations-Bits. Je wichtiger ein Informationsbit ist, desto näher sollen die Dummy-Bits ihm liegen und/oder je mehr bekannte Bits sollen nahe bei ihm eingefügt werden.

In vorteilhafter Weise wird durch die Einfügung der vorbekannten Bits aus einem Code höherer Rate ein Code niedrigerer Rate gebildet. Besonders zweckmäßig ist die Anwendung auf einen systematischen Code, wobei die eingefügten vorbekannten Bits (Dummy-Bits) in den Code-Bits nicht mit übertragen werden.

Es ist auch eine vorteilhafte Verknüpfung mit einer Punktierung zweckmäßig, indem die Code-Bits nach Anwendung des vorgeschlagenen Verfahrens punktiert werden.

In Verbindung mit dem vorgeschlagenen Verfahren können Decodierverfahren wie die quellengesteuerte Kanaldecodierung eingesetzt werden, wobei für die bekannten Bits das maximale (absolute) Apriori-Wissen (bei Apri-VA Algorithmus das Log-Likelihood Ratio) auf der Empfangsseite gesetzt wird.

Wesentliche Vorteile des vorgeschlagenen Verfahrens sind:

- Einfachheit bei der Realisierung. Mit der Ausnahme, daß ein Apriori-Wissen nutzender Kanaldecoder (z.B. der Apri-VA Algorithmus statt eines normalen VA (Viterbi-Algorithmus) verwendet wird, bleiben alle anderen Teile der Kanalcodecs unverändert. Dadurch ist ein UEP für eine vorgegebene Übertragungsstruktur (wie 3 GPP) ohne weitere Änderung realisierbar.

- Flexibilität. Es ist leicht, UEP auf individuellen Informationsbits anzupassen.

- Fortfall eines gesonderten Overhead.

Für das obige Beispiel (12.2 kbit/s AMR-Codec bei UMTS) können alle 244 Bits mit Hilfe des hier vorgeschlagenen Verfahrens innerhalb eines Transport-Kanals übertragen werden.

Während die Ausführung speziell beim ungleichen Fehlerschutz lediglich eine Klassifizierung der Informationsbits in zwei Klassen - nämlich wichtigere (signifikantere) und weniger wichtige (weniger signifikante) - voraussetzt, erfolgt in einer bevorzugten Ausführung eine feiner abgestufte Klassifizierung in mindestens drei Klassen, verbunden mit der Einfügung von jeweils mehreren aufeinanderfolgenden Dummy-Bits nahe Informationsbits von höherer Signifikanz und von einem Dummy-Bit nahe Informationsbits mit mittlerer Signifikanz.

Bei einer zur Ausführung des erfindungsgemäßen Verfahrens geeigneten Vorrichtung umfaßt der Codierer Mittel zur Einfügung der vorbekannten Datenbits (Dummy-Bits) an Positionen nahe der Positionen wichtiger Informationsbits. Eine solche Vorrichtung umfaßt weiterhin eine Klassifizierungseinrichtung zur Klassifizierung der Informationsbits nach ihrer Signifikanz, oder sie ist zumindest mit einer Quelle entsprechender Klassifizierungssignale, beispielsweise mit einer Speichereinrichtung einer externen Klassifizierungseinrichtung, verbunden.

Zur Decodierung des empfangenen (faltungscodierten) Bitstromes kann beispielsweise ein wie folgt modifizierter Viterbi-Algorithmus (VA) verwendet werden. Ein Trellis-Diagramm eines Faltungscodes besteht aus Zweigen (Zustandübergängen) und Knoten, wobei jedem Knoten mehrere Zweige zusammen kommen können. Ein Knoten repräsentiert einen Zustand des Gedächtnisses des Faltungscodes. Für einen Rate 1/n Faltungscode und zu einem bestimmten Zeitpunkt gibt es im Trellis-Diagramm $2^{m+1}$ Zweige zum nächsten Zeitpunkt, wenn kein Bit vordefiniert wird. Wird ein Dummy-Bit eingefügt, sind dann nur noch $2^m$ Zweige möglich. Der normale Viterbi-Decoder kann dann so modifiziert werden, dass nur diese Zweige erreicht werden. In anderen Worten, die Pfade, die nicht über die $2^m$ Zweige laufen, werden verworfen. Diese Methode kann für mehrere Dummy-Bits und andere Codes erweitert werden.

Dabei umfaßt ein solches System eine Ablaufsteuerung zur Steuerung der entsprechenden Prüfungen für die über mehrere Pfade im Trellis-Diagramm verarbeiteten Datenbitströme anhand der Positionen und Werte der Dummy-Bits sowie eine Entscheidungseinheit, die mit der Vergleichereinheit verbunden ist und in Abhängigkeit vom Ergebnis des jeweils ausgeführten Vergleiches eine Entscheidung zum Verwerfen oder zur Bestätigung bzw. Auswahl eines Pfades trifft.

In einer weiteren bevorzugten Ausführung umfaßt ein solches Gesamtsystem einen quellengesteuerten Kanaldecoder, der insbesondere einen Apri-Viterbi-Algorithmus oder MAP-Algorithmus realisiert. Ein solcher umfaßt eine Datenbasis für die sog. "L-Werte" (Werte des Log-Likelihood-Verhältnisses) der eingefügten bekannten Bits.

Besondere praktische Bedeutung hat das vorgeschlagene Verfahren für die fehlergeschützte Übertragung von Quellensignalen, insbesondere Sprachsignalen. Es ist daher besonders für die Anwendung in einem Mobilfunksystem geeignet.

Vorteile und Zweckmäßigkeiten der Erfindung ergeben sich im übrigen aus den Unteransprüchen sowie der nachfolgenden Erläuterung von speziellen Ausführungen und Aspekten anhand der Figuren. Von diesen zeigen:

Fig. 1 eine schematische Darstellung eines Datenbitstromes vor der Kanalcodierung bzw. des entsprechenden Apriori-Wissensbasis für eine Kanaldekodierung,

Fig. 2 eine Darstellung der Simulation der BER in Abhängigkeit von der Bitnummer eines VA-Decoders eines AWGN-Kanals,

Fig. 3 eine Darstellung für den Schutz eines Faltungscodes mit vorbestimmten Dummy-Bits und

Fig. 4 eine Darstellung der Simulation eines RSC-Codes eines AWGN-Kanals.

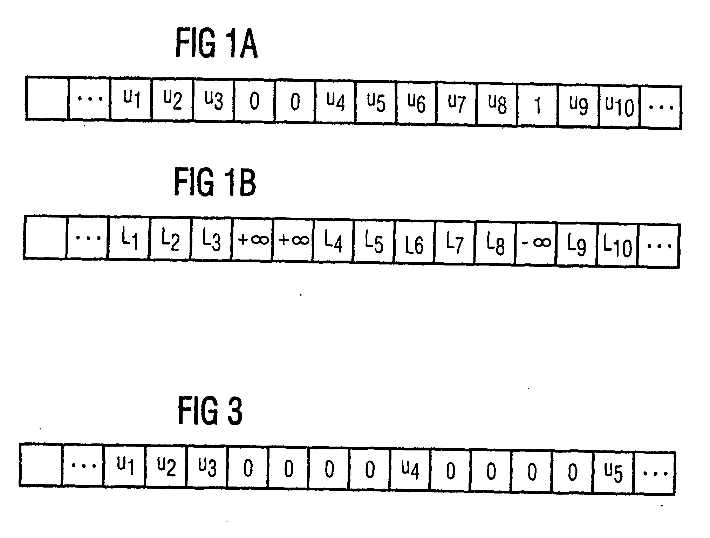

Wie in Fig. 1 dargestellt, sollten die Bits $u_3$ und $u_4$ besser geschützt sein als $u_8$ und $u_9$, die wiederum besser geschützt sind als $u_1, u_6, u_7, ...$ . Dann kann man zwei bekannte Bits ("0" oder "1") zwischen $u_3$ und $u_4$ und ein bekanntes Bit ("0" oder "1") zwischen $u_8$ und $u_9$ einsetzen. Auf der Seite der Decodierung soll dieses Apriori-Wissen genutzt werden, d.h. die zwei Bits zwischen $u_3$ und $u_4$ sind "0" und das Bit zwischen $u_8$ und $u_9$ ist "1".

Zur Decodierung sind folgende Methoden möglich:

- Im Falle eines normalen VA kann beispielsweise dieses Apriori-Wissen bei der Selektion der möglichen Pfade verwendet werden, d.h. Pfade, mit denen die bekannten Bits falsch decodiert werden, werden weggeworfen. Dies ist ähnlich wie der Terminierung eines Faltungscodes.

- Bei Verwendung eines Apri-VA oder eines ähnlichen Algorithmus, wie z.B. des MAP(maximum a posteriori probability)-Decodierungsalgorithmus, kann man die Apriori-L-Werte für die bekannten Dummy-Bits als zulässige maximale Werte (z.B. $L$ = +∞ für Bit "0" und $L$ = -∞ für Bit "1") einsetzen. Für die Informationsbits $u_1, u_2, u_3, u_4, ...$, falls kein Apriori-Wissen vorhanden, dann gilt $L_i = 0$ ($i$ = 1, 2, ...).

- Für systematische Kanalcodes wie beispielsweise die Recursive Systematic Convolutional Codes, die bereits bei der GSM AMR-Kanalcodierung und auch als Komponentcodes bei Turbo-Codes verwendet werden, kann man den Apriori L-Wert eines Informationsbits zunächst auf den Kanal-Softwert (d.h. Soft-Input-Wert des Kanaldecoders) des entsprechenden systematischen Codebits (= Informationsbit) addieren und dann den resultierenden Softwert als Soft-Input-Wert des Kanaldecoders verwenden. Auf dieser Weise läßt sich ein Apriori-Wissen nutzender Kanaldecoder (z.B. der Apri-VA Algorithmus) direkt mit einem konventionellen VA (ohne Modifikation) realisieren.

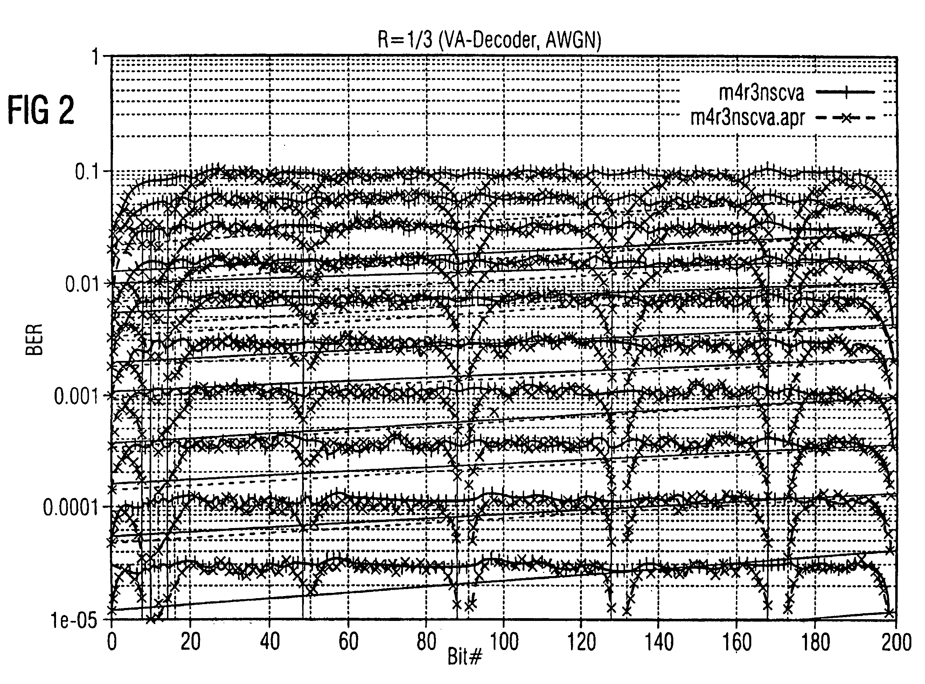

Fig. 2 zeigt die Simulationsergebnisse für einen Faltungscode mit Constraint Length $m+1$ = 5. und Rate 1/3 unter einem AWGN(additive white Gaussian noise)-Kanal. Die Blocklänge beträgt 200 (Bit 0 ... Bit 199). Die verwendeten Generator-Polynome sind

$$G_1 = 1 + D^3 + D^4$$

$$G_2 = 1 + D + D^2 + D^4$$

$$G_3 = 1 + D^2 + D^3 + D^4,$$

wobei die Codes einen bekannten Anfangszustand haben und am Ende des Datenblocks mit m Tailbits (4 Bits gleich 0 in unserem Fall) terminiert werden.

Die durchgezogenen Linien (mit dem Symbol "+") zeigen die BER aller 200 Informationsbits unter Verwendung einer normalen Codierung/Decodierung (ohne Dummy-Bits), und die gestrichelten Linien (mit dem Symbol "x") zeigen die BER, wenn bekannte Dummy-Bits auf den Bitpositionen 9, 11, 15, 49, 89, 90, 129, 130, 131, 169, 170, 171, 172 sind (und dabei der Apri-VA verwendet wird). Es läßt sich entnehmen, daß ohne Berücksichtigung der Dummy-Bits, deren BER=0 beträgt, die Informationsbits unmittelbar nahe den Dummy-Bits eine niedrigere BER haben als die Informationsbits weit weg von den Dummy-Bits. Dadurch wurde ein UEP erzielt. Die verschiedenen parallelen Linien repräsentieren die verschiedenen Kanalkonditionen (von oben nach unten, das Signal-Rausch-Verhältnis S/N = -5.0, - 4.5, -4.0, -3.5, -3.0, -2.5, -2.0, -1.5, -1.0, ...).

Bemerkungen:

- Es ist anzumerken, daß die Bits auf dem Anfang und Ende des Datenblocks ebenfalls eine niedrigere BER haben. Dies ist eine Folge der bekannten Anfangs- und Ende-Zustände (wenn terminiert) des Faltungscodes. In der Tat basiert das hier vorgeschlagene Verfahren auf einem ähnlichen Prinzip wie die Codeterminierung. Abweichend ist, daß man die bekannten Bits bei der Terminierung *nur* am Ende des Datenblocks (auf einmal) einsetzt, da sonst ohne Terminierung die Bits auf dem Ende des Datenblocks wesentlich schlechter geschützt werden als die anderen Bits. Dagegen werden in unserem Vorschlag die bekannten Bits in der Nähe der Bits, die besser geschützt werden sollen, in der Regel mehrmals eingesetzt werden.

- Durch Verwendung zusätzlicher Dummy-Bits (d.h. Einfügung von mehr Redundanz) werden die Informationbits immer besser geschützt. Es folgt keine Verschlechterung der Performance.

- Ebenfalls ähnlich wie bei der Terminierung eines Faltungscodes, ist die zusätzliche Schutzwirkung der Dummy-Bits grundsätzlich auf die Einflußlänge des Codes beschränkt. Je nachdem, wie viele Dummy-Bits eingesetzt werden, kann der Schutzbereich das 2- bis 3-fache der Einflußlänge (m+1) erreichen. Ist z.B. die Einflußlänge gleich 5, dann können die Bits zusätzlich geschützt werden, die eine Entfernung von bis 10 - 15 Bits von den Dummy-Bits haben.

- Für einen normalen nicht-systematischen Faltungscode sollen nicht mehr als *m* Bits hintereinander als Dummy-Bits verwendet werden (*m* = Codegedächtnis), da mit *m* Bits der Code bereits terminiert ist, d.h. eine weitere Verringerung der BER durch mehr als m Bits nicht möglich ist.

Fig. 3 zeigt, daß für einen nicht-systematischen Faltungscode mit *m* = 4 das Bit $u_4$ durch 8 Dummy-Bits (4 in der linken Seite und 4 in der rechten) am besten geschützt wird.

Die obigen Erläuterungen gelten zwar für Faltungscodes, das Prinzip ist aber anwendbar für alle Codes, für die nach Codierung Korrelation zwischen den hintereinander liegenden Codebits vorhanden ist (z.B. Turbo-Codes).

Das vorgeschlagene Verfahren ist für systematische Kanalcodes (z.B. die Recursive Systematic Convolutional/RSC Codes, oder Turbo Codes) besonders attraktiv und effizient, da die eingefügten gleichen Dummy Bits (z.B. "0's" ) in die Codewörter (als systematische Codebits) abgespiegelt werden und nicht übertragen werden müssen.

Dies soll an einem Beispiel erläutert werden: Werden die Bits a-b-c-**0-d-0**-e-f-g-... kanalcodiert mit einem Code von Rate 1/2 und übertragen, wobei a-b-c-**d**-e-f-g die Datenbits sind und **d** durch eine Einfügung von zwei **0**'s besser geschützt werden soll, dann haben die codierten Bits (Codebits oder Codewörter) im Falle eines systematischen Codes eine Form von aA-bB-cC-**0X-dD-0X**-eE-fF-gG-... Dabei gilt für a, A, b, B, ..., **X** $\in$ {0, 1} und im allgemeinen **X** = beliebig (Das erste **X** ist nicht unbedingt gleich dem zweiten **X**). Da die zwei Dummy-Bits 0 auf der Empfangsseite bekannt sind, brauchen wir nur die Bits aA-bB-cC-**X**-**d**D-**X**-eE-fF-gG-... zu übertragen. Die nicht-übertragenen Dummy Bits kann man ggf. vor der Decodierung (mit einer höchsten Zuverlässigkeit) zurücksetzen. Dies entspricht einer niedrigeren äquivalenten Coderate. Im Falle eines nicht-systematischen Codes haben die codierten Bits im allgemeinen eine Form von AA-BB-CC-XX-DD-XX-EE-FF-GG, die alle übertragen werden müssen/sollten.

Durch dieses Verfahren lassen sich im allgemeinen alle Codes (systematisch oder nicht-systematisch) mit niedrigeren Raten aus Codes mit höheren Raten bilden (siehe das nachfolgende Beispiel). Es ist daher möglich, dass man dieses Verfahren mit Punktierung, durch die Codes mit höheren Raten aus Codes mit niedrigeren Raten generiert werden können, kombiniert, um eine gewünschte (beliebige) Coderate und/ oder eine optimale Performance zu erzielen.

Beispiel: Wir können einen systematischen Code der Rate 1/3 aus einem systematischen Code der Rate 1/2 bilden, nämlich durch regelmäßige Einfügung von 0: a-**0**-b-**0**-c-**0**-d-**0**-... Codiert man diese Bits mit einem Rate-1/2-Code, erhält man aA-**0X**-bB-**0X**-cC-**0X**-dD-**0X**-... Die zu übertragenden Bits sind dann aA-**X**-bB-**X**-cC-**X**-dD-**X**-... Die äquivalente Coderate ist 1/3, da ein Rate 1/3-Code die gleiche Anzahl von Codebits, nämlich aA**X**-bB**X**-cC**X**-dD**X**-... generiert. Ähnlich können wir Codes von äquivalenten Raten 2/5 (a-b-**0**-c-d-**0**-e...). 3/7 (ab-c-0-d-e-f-**0**-...), ... aus einem systematischen Code der Rate 1/2 bilden. In unserer Simulation wurde gezeigt, dass ein dadurch gebildeter Rate 1/3-Code fast die gleiche Performance liefert wie der optimale Rate 1/3-Code.

Für Fig. 4 gelten die folgenden Angaben: *m*=8, AWGN Kanal, RSC Code mit den Polynormen aus *TS 25.212 V2. 0. 0 (1999-06), 3rd* Generation Partnership Project *(3GPP); Technical* Specification Group *(TSG),* Radio Access *Network* (RAN); *Working Group 1 (WG1)*), mit

- m8r2rscvach0.pro.-3 = Code mit einer Rate 1/2, Kanal $E_S/N_0$ = -3 dB
- m8r3rscvach0.pro.-3 = Code mit einer Rate 1/3, Kanal $E_S/N_0$ = -3 dB

- m8r2rscvach0_a1p2.pro.-3 = Code mit einer äquivalenten Rate von 1/3, Kanal $E_S/N_0$ = -3 dB (vorgeschlagenes Verfahren)
- m8r2rscvach0_alp3.pro.-3 = Code mit einer äquivalenten Rate von 2/5, Kanal $E_S/N_0$ = -3 dB (vorgeschlagenes Verfahren)
- m8r2rscvach0_alp4.pro.-3 = Code mit einer äquivalenten Rate von 3/7, Kanal $E_S/N_0$ = -3 dB (vorgeschlagenes Verfahren)
- m8r2rscvach0_alp5.pro.-3 = Code mit einer äquivalenten Rate von 4/9, Kanal $E_S/N_0$ = -3 dB (vorgeschlagenes Verfahren)

Die Ausführungen der Erfindung sind nicht auf die oben beschriebenen Beispiele beschränkt, sondern ebenso in einer Vielzahl von Abwandlungen möglich, die im Rahmen fachgemä-ßen Handelns liegen.

**Patentansprüche**

1. Verfahren zum Fehlerschutz eines Datenbitstromes in einem digitalen Nachrichtenübertragungssystem zur Reduzierung der Bitfehlerrate,
**dadurch gekennzeichnet, daß**
vor einer Kanalcodierung eine Mehrzahl vorbekannter Dummy-Bits in nicht-terminierender Weise an vorbestimmten Bit-Positionen des primären Datenbitstromes nahe informationstragenden Bits, insbesondere auf beiden Seiten derselben, eingefügt wird.

2. Verfahren nach Anspruch 1,
**dadurch gekennzeichnet, daß**
durch die Einfügung der vorbekannten Dummy-Bits aus einem Code höherer Rate ein Code niedrigerer Rate gebildet wird.

3. Verfahren nach Anspruch 1 oder 2, **gekennzeichnet durch**
die Anwendung auf einen systematischen Code, wobei die Dummy-Bits in den Code-Bits nicht übertragen werden.

4. Verfahren nach einem der vorangehenden Ansprüche,
**dadurch gekennzeichnet, daß**
die Code-Bits anschließend punktiert werden.

5. Verfahren nach einem der vorangehenden Ansprüche,
**dadurch gekennzeichnet, daß**
die Informationsbits des primären Datenbitstromes einer Klassifikation ihrer Signifikanz in mindestens zwei Klassen unterzogen und Dummy-Bits nahe signifikant informationstragenden Bits eingefügt werden.

6. Verfahren nach einem der vorangehenden Ansprüche,
**gekennzeichnet durch**
die Anwendung bei einem Mobilfunksystem.

7. Verfahren nach einem der vorangehenden Ansprüche,
**gekennzeichnet durch**
die Anwendung zur Übertragung von Quellensignalen, insbesondere von Sprachsignalen.

8. Verfahren nach einem der Ansprüche 4 bis 7,
**gekennzeichnet durch**
die Anwendung auf einen Faltungscode.

9. Verfahren nach einem der vorangehenden Ansprüche,
**dadurch gekennzeichnet, daß**
empfangsseitig eine Pfadselektion, insbesondere im Rahmen eines Viterbi-Algorithmus, aufgrund des geschützten Datenbitstromes ausgeführt wird, wobei jeweils an den Stellen der Dummy-Bits die Übereinstimmung des verarbeiteten mit dem geschützten Datenbitstrom geprüft und im Falle einer Nichtübereinstimmung der entsprechende Pfad verworfen wird.

10. Verfahren nach einem der vorangehenden Ansprüche,
**dadurch gekennzeichnet, daß**
eine Decodierung des geschützten Datenbitstromes als quellengesteuerte Kanaldecodierung, insbesondere mittels eines Apri-Viterbi-Algorithmus oder MAP-Algorithmus, ausgeführt wird.

11. Verfahren nach Anspruch 9,
**dadurch gekennzeichnet, daß**
für einen systematischen Kanalcode, insbesondere einen Recursive Systematic Convolutional Code, ein Apriori-L-Wert eines Informationsbits zu einem Soft-Input-Wert des entsprechenden systematischen Codebits addiert und anschließend eine Decodierung mittels eines konventionellen Viterbi-Algorithmus durchgeführt wird.

12. Vorrichtung zur Durchführung des Verfahrens nach einem der vorangehenden Ansprüche,
**gekennzeichnet durch**
einen Codierer mit Mitteln zur Einfügung vorbekannter Datenbits an vorbestimmten Bitpositionen des zu codierenden primären Datenbitstromes.

13. Vorrichtung nach Anspruch 11,
**gekennzeichnet durch**
eine Klassifizierungseinrichtung zur Klassifizierung der Signifikanz der Informationsbits des primären Datenbitstromes, deren Ausgang mit den Mitteln zur Steuerung der Einfügung vorbekannter Datenbits verbunden ist.

**14.** Vorrichtung nach Anspruch 11 oder 12, **dadurch gekennzeichnet, daß**
zur Decodierung von Informationsbits, insbesondere mittels eines Viterbi-Algorithmus, eine Ablaufsteuereinheit zur Steuerung der Prüfung mehrerer Pfade für den empfangenen Datenbitstrom, eine Vergleichereinheit zur Prüfung der über mehrere Pfade verarbeiteten Datenbitströme anhand der Positionen und Werte der Dummy-Bits und eine mit dem Ausgang der Vergleichereinheit verbundene Entscheidungseinheit zum Verwerfen oder Zulassen des dem jeweils geprüften Datenbitstrom zugeordneten Pfades im Ergebnis des Vergleiches vorgesehen sind.

**15.** Vorrichtung nach einem der Ansprüche 11 bis 13, **gekennzeichnet durch**
einen quellengesteuerten Kanaldecodierer, insbesondere zur Ausführung eines Apri-Viterbi-Algorithmus oder MAP-Algorithmus.

**Claims**

**1.** Method for providing error protection for a data bit stream in a digital telecommunications transmissions system in order to reduce the bit error rate, **characterized in that**, before channel coding, a multiplicity of previously known dummy bits are inserted in a non-terminating fashion at predetermined bit positions in primary data bit stream near to information-carrying bits, in particular on both sides thereof.

**2.** Method according to Claim 1, **characterized in that** a code with a relatively low rate is formed from a code with a relatively high rate by means of the insertion of previously known dummy bits.

**3.** Method according to Claim 1 or 2, **characterized by** application to a systematic code, the dummy bits not being transmitted in the code bits.

**4.** Method according to one of the preceding claims, **characterized in that** the code bits are subsequently punctured.

**5.** Method according to one of the preceding claims, **characterized in that** the information bits of the primary data bit stream are subjected to classification of their significance into at least two classes and dummy bits are inserted near to bits which carry information to a significant degree.

**6.** Method according to one of the preceding claims, **characterized by** application in a mobile telephone system.

**7.** Method according to one of the preceding claims, **characterized by** application for the transmission of source signals, in particular of voice signals.

**8.** Method according to one of Claims 4 to 7, **characterized by** application to a convolutional code.

**9.** Method according to one of the preceding claims, **characterized in that** at the receiver end a path selection is carried out, in particular within the framework of a Viterbi algorithm, on the basis of the protected data bit stream, the resemblance between the processed data bit stream and the protected data bit stream being checked in each case at the locations of the dummy bits and the respective path being rejected in the case of non-correspondence.

**10.** Method according to one of the preceding claims, **characterized in that** the protected data bit stream is decoded as source-controlled channel decoding, in particular by means of an Apri-Viterbi algorithm or MAP algorithm.

**11.** Method according to Claim 9, **characterized in that** an Apriori-L value of an information bit is added to a soft input value of the corresponding systematic code bit for a systematic channel code, in particular a recursive systematic convolutional code, and decoding is subsequently carried out by means of a conventional Viterbi-algorithm.

**12.** Device for carrying out the method according to one of the preceding claims, **characterized by** a coder with means for inserting previously known data bits at predetermined bit positions of the primary data bit stream to be coded.

**13.** Device according to Claim 11, **characterized by** a classification device for classifying the significance of the information bits of the primary data bit stream, the output of said classification device being connected to the means for controlling the insertion of previously known data bits.

**14.** Device according to Claim 11 or 12, **characterized in that** a sequencing control unit for controlling the checking of a plurality of paths for the received data bit stream, a comparator unit for checking the data bit streams which are processed by means of a plurality of paths, by reference to the positions and values of the dummy bits, and a decision unit, connected to the output of the comparator unit, for rejecting or approving the path assigned to the respectively tested data bit stream, as a result of the comparison, are provided for decoding information bits, in particular by means of a Viterbi-Algorithm.

15. Device according to one of Claims 11 to 13, **characterized by** a source-controlled channel decoder, in particular for executing an Apri-Viterbi-Algorithm or MAP-Algorithm.

## Revendications

1. Procédé pour la protection contre les erreurs d'un train de bits de données dans un système numérique de transmission d'information pour la réduction du taux d'erreur sur les bits, **caractérisé en ce que**, avant un codage du canal, une pluralité de Dummy-Bits déjà connus est insérée de façon non terminante sur des positions de bit prédéfinies du train primaire de bits de données à proximité de bits portant l'information, en particulier des deux côtés de ceux-ci.

2. Procédé selon la revendication 1, **caractérisé en ce que**, par l'insertion des Dummy-Bits déjà connus, on forme à partir d'un code de facteur plus élevé un code de facteur plus bas.

3. Procédé selon la revendication 1 ou 2, **caractérisé par** l'application à un code systématique, les Dummy-Bits n'étant pas transférés dans les bits de code.

4. Procédé selon l'une quelconque des revendications précédentes, **caractérisé en ce que** les bits de code sont pointillés par la suite.

5. Procédé selon l'une quelconque des revendications précédentes, **caractérisé en ce que** les bits d'information du train primaire de bits de données sont soumis à une classification de leur importance en au moins deux classes et que des Dummy-Bits proches de bits portant l'information de façon significative sont insérés.

6. Procédé selon l'une quelconque des revendications précédentes, **caractérisé par** l'application dans un système de téléphonie mobile.

7. Procédé selon l'une quelconque des revendications précédentes, **caractérisé par** l'application pour la transmission de signaux de sources, en particulier de signaux vocaux.

8. Procédé selon l'une quelconque des revendications 4 à 7, **caractérisé par** l'application à un code de convolution.

9. Procédé selon l'une quelconque des revendications précédentes, **caractérisé en ce que**, côté réception, une sélection de chemin, en particulier dans le cadre d'un algorithme de Viterbi, est réalisée sur la base du train de bits de données protégé, la concordance du train de bits d'information traité avec le train de bits de données protégé étant contrôlée aux emplacements des Dummy-Bits et le chemin correspondant étant rejeté dans le cas d'une non-concordance.

10. Procédé selon l'une quelconque des revendications précédentes, **caractérisé en ce qu'**un décodage du train de bits de données protégé est réalisé en tant que décodage de canal commandé par source, en particulier au moyen d'un algorithme de Apri-Viterbi ou d'un algorithme de MAP.

11. Procédé selon la revendication 9, **caractérisé en ce que**, pour un code de canal systématique, en particulier un Recursive Systematic Convolutional Code, une valeur L Apriori d'un bit d'information est ajoutée à une valeur d'entrée soft du bit de code systématique correspondant et un décodage est effectué ensuite au moyen d'un algorithme de Viterbi classique.

12. Dispositif pour la mise en oeuvre du procédé selon l'une quelconque des revendications précédentes, **caractérisé par** un codeur comprenant des moyens pour l'insertion de bits de données déjà connus sur des positions de bit prédéfinies du train de bits de données primaire à coder.

13. Dispositif selon la revendication 11, **caractérisé par** un dispositif de classification pour la classification de l'importance des bits d'information du train de bits de données primaire, leur sortie étant reliée aux moyens destinés à la commande de l'insertion de bits de données déjà connus.

14. Dispositif selon la revendication 11 ou 12, **caractérisé en ce que**, pour le décodage de bits d'information, en particulier au moyen d'un algorithme de Viterbi, il est prévu une unité de commande séquentielle pour la commande du contrôle de plusieurs chemins pour le train de bits de données reçu, une unité de comparateur pour le contrôle des trains de bits de données traités sur plusieurs chemins à l'aide des positions et valeurs des Dummy-Bits et

une unité de décision reliée à la sortie de l'unité de comparateur pour le rejet ou l'autorisation du chemin attribué au train de bits de données respectivement contrôlé en conclusion de la comparaison.

**15.** Dispositif selon l'une quelconque des revendications 11 à 13,
**caractérisé par**
un décodeur de canal commandé par source, en particulier pour la mise en oeuvre d'un algorithme de Apri-Viterbi ou d'un algorithme de MAP.

## FIG 1A

| | ... | $u_1$ | $u_2$ | $u_3$ | 0 | 0 | $u_4$ | $u_5$ | $u_6$ | $u_7$ | $u_8$ | 1 | $u_9$ | $u_{10}$ | ... |
|---|---|---|---|---|---|---|---|---|---|---|---|---|---|---|---|

## FIG 1B

| | ... | $L_1$ | $L_2$ | $L_3$ | $+\infty$ | $+\infty$ | $L_4$ | $L_5$ | $L_6$ | $L_7$ | $L_8$ | $-\infty$ | $L_9$ | $L_{10}$ | ... |
|---|---|---|---|---|---|---|---|---|---|---|---|---|---|---|---|

## FIG 3

| | ... | $u_1$ | $u_2$ | $u_3$ | 0 | 0 | 0 | 0 | $u_4$ | 0 | 0 | 0 | 0 | $u_5$ | ... |
|---|---|---|---|---|---|---|---|---|---|---|---|---|---|---|---|

FIG 2

R=1/3 (VA-Decoder, AWGN)

BER

Bit#

m4r3nscva
m4r3nscva.apr

EP 1 198 913 B1

FIG 4